# EUROPÄISCHE PATENTSCHRIFT

(11) **EP 2 070 623 B1**
(45) Veröffentlichungstag und Bekanntmachung des Hinweises auf die Patenterteilung: **17.08.2011**
(21) Anmeldenummer: 08020550.3
(22) Anmeldetag: 26.11.2008
(51) Int. Cl.: B23D 45/16, B23D 59/00, B27B 9/02

(54) **Bearbeitungsmaschine**
Machining unit
Machine de traitement

(30) Priorität: 11.12.2007 DE 102007059477
(43) Veröffentlichungstag der Anmeldung: 17.06.2009
(73) Patentinhaber: Mafell AG, 78727 Oberndorf (DE)
(72) Erfinder: Zimmermann, Horst, 72160 Horb-Betra (DE); Lauckner, Helmut, 72172 Sulz a. N. (DE)
(74) Vertreter: Manitz, Finsterwald & Partner GbR

(56) Entgegenhaltungen:
- DE-A1- 19 933 145
- US-A- 3 262 471

## Beschreibung

Die vorliegende Erfindung betrifft eine Vorrichtung umfassend eine Bearbeitungsmaschine, insbesondere eine elektrische Tauchkreissäge, wobei die Bearbeitungsmaschine einen, insbesondere eine Grundplatte umfassenden, Grundkörper, ein in Bezug auf den Grundkörper verstellbares Maschinenteil, das ein angetriebenes Bearbeitungswerkzeug umfasst, und eine Anzeigevorrichtung aufweist, die eine Skala und ein Zeigerelement umfasst, wobei die Skala und das Zeigerelement zusammenwirken, um eine aktuelle Position des Bearbeitungswerkzeugs in Bezug auf ein zu bearbeitendes Werkstück, insbesondere eine Bearbeitungstiefe, anzuzeigen, wobei das Zeigerelement in Bezug auf die Skala zwischen einer ersten Stellung, die einer ersten Betriebsart der Bearbeitungsmaschine entspricht, und einer zweiten Stellung, die einer zweiten Betriebsart der Bearbeitungsmaschine entspricht, umschaltbar ist.

Derartige Anzeigevorrichtungen sind beispielsweise als Schnitttiefenanzeiger bei Tauchkreissägen bekannt, welche die aktuell eingestellte Schnitttiefe für einen Benutzer kenntlich machen. In der Praxis werden derartige Tauchkreissägen je nach Anwendungsfall in unterschiedlichen Betriebsarten verwendet. Dabei tritt das Problem auf, dass der Schnitttiefenanzeiger nur für eine bestimmte Betriebsart korrekt abgestimmt ist und somit in anderen Betriebsarten unkorrekte Anzeigen liefern kann. Beispielsweise ergibt sich bei Verwendung einer Führungsschiene zwischen Maschine und Werkstück eine Diskrepanz zwischen der tatsächlichen Schnitttiefe und der angezeigten Schnitttiefe, da die tatsächliche Schnitttiefe um die Höhe der Führungsschiene verringert ist. Die Höhe der Führungsschiene muss also bei der Einstellung der gewünschten Schnitttiefe vom Benutzer berücksichtigt werden, was die Bequemlichkeit der Handhabung beeinträchtigt und das Fehlerrisiko erhöht.

In der US-A-3 262 471 ist eine Tauchkreissäge mit einem Schnitttiefenanzeiger offenbart. Der Schnitttiefenanzeiger umfasst eine am Maschinenteil der Säge angebrachte Skala sowie einen plattenförmigen Zeiger. Der Zeiger ist mittels einer Schraube am Sägengehäuse befestigt. Da die Schraube durch ein Langloch geführt ist, kann bei dem Zeiger eine Nullpunktsverstellung durchgeführt werden, um beispielsweise Sägeblätter von unterschiedlichem Durchmesser zu berücksichtigen.

Aufgabe der Erfindung ist es, eine Bearbeitungsmaschine mit einer Anzeigevorrichtung zur Verfügung zu stellen, welche ein einfaches, bequemes und zuverlässiges Arbeiten in unterschiedlichen Betriebsarten ermöglicht.

Die Lösung dieser Aufgabe erfolgt durch die Merkmale des Anspruchs 1.

Eine erfindungsgemäße Vorrichtung umfasst eine Führungsschiene, wobei der Versatz der angezeigten Positionen des Bearbeitungswerkzeugs zwischen der ersten und der zweiten Stellung des Zeigerelements der Höhe der Führungsschiene entspricht.

Durch eine derartige Verstellbarkeit des Zeigerelements kann ein Benutzer die Anzeigevorrichtung in einfacher und bequemer Weise an die aktuell gewünschte Betriebsart anpassen. Ein zeitraubendes und fehleranfälliges Umrechnen der angezeigten Schnitttiefe in die tatsächliche Schnitttiefe oder umgekehrt kann dadurch entfallen. Erfindungsgemäß kann das Verstellen des Zeigerelements also manuell durch den Benutzer erfolgen. Alternativ oder zusätzlich ist es aber auch möglich, eine Verstellautomatik vorzusehen, die automatisch detektiert, ob sich die Bearbeitungsmaschine in einem Modus mit erster Betriebsart oder in einen Modus mit zweiter Betriebsart befindet, und die daraufhin automatisch das Zeigerelement in die entsprechende Stellung bringt. Insbesondere kann also vorgesehen sein, dass eine automatische Nachweiseinrichtung vorhanden ist, die das Vorhandensein einer Führungsschiene detektieren kann.

Die Erfindung wird im Folgenden beispielhaft unter Bezugnahme auf die Zeichnung beschrieben. In dieser zeigen:
- Fig. 1: eine schematische Draufsicht auf die Anzeigevorrich- tung einer erfindungsgemäßen Bearbeitungsmaschine, wobei sich das Zeigerelement in der ersten Stellung be- findet; und
- Fig. 2: eine schematische Draufsicht auf die Anzeigevorrich- tung von Fig. 1, wobei sich das Zeigerelement in der zweiten Stellung befindet.

Die in den Figuren dargestellte Anzeigevorrichtung 11 umfasst eine Skala 13 und ein Zeigerelement 15. Die Skala 13 ist fest mit der Grundplatte einer nicht dargestellten elektrischen Tauchkreissäge verbunden. Das Zeigerelement 15 ist an einem Sockelelement 17 angebracht, welches fest mit einem in Bezug auf die Grundplatte verschwenkbaren Maschinenteil der Tauchkreissäge verbunden ist. Das Maschinenteil umfasst einen Motor und ein durch diesen rotierend angetriebenes Sägeblatt. Durch ein Verschwenken des Maschinenteils relativ zu der Grundplatte kann das rotierende Sägeblatt in ein zu bearbeitendes Werkstück eingetaucht werden. Während des Eintauchens des Sägeblatts bewegt sich das Zeigerelement 15 relativ zu der Skala 13, so dass sich eine Zuordnung zwischen der Position des Zeigerelements 15 in Bezug auf die Skala 13 und der aktuellen Schnitttiefe ergibt. Auf der Skala können geeignete Strichmarkierungen, Ziffern und/oder Maßangaben vorgesehen sein, um ein einfaches und schnelles Ablesen der aktuellen Schnitttiefe zu ermöglichen.

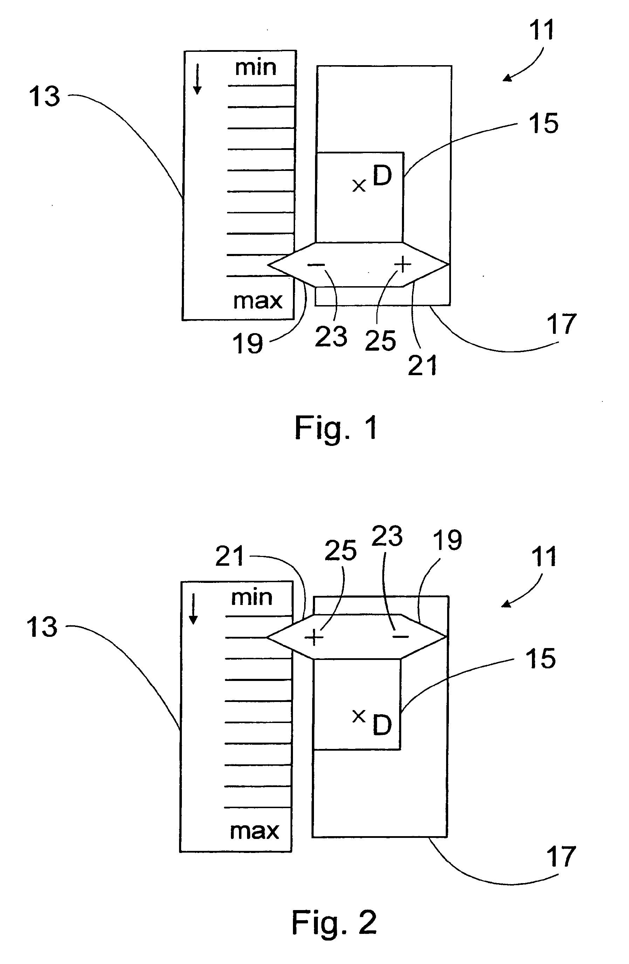

Das Zeigerelement 15 kann zur Kompensation eines Schnitttiefenversatzes zwischen der in Fig. 1 dargestellten ersten Stellung und der in Fig. 2 dargestellten zweiten Stellung verstellt werden. Die in Fig. 1 dargestellte Stellung entspricht dabei einer Verwendung der Tauchkreissäge ohne eine vorbestimmten Führungsschiene, während die in Fig. 2 dargestellte Stellung einer Verwendung der Tauchkreissäge mit Führungsschiene entspricht. Es ist zu erkennen, dass die in Fig. 2 angezeigte Schnitttiefe geringer ist als die in Fig. 1 angezeigte Schnitttiefe. Es gibt also einen Versatz der angezeigten Schnitttiefe zwischen der ersten und der zweiten Zeigerelementstellung. Der Betrag dieses Versatzes ist derart ausgewählt, dass er der Höhe einer vorbestimmten, üblicherweise verwendeten Führungsschiene entspricht. Wenn sich das Zeigerelement 15 in der ersten Stellung gemäß Fig. 1 befindet, kann die Bearbeitungsmaschine in üblicher Weise ohne Führungsschiene verwendet werden. Bei Einsatz einer Führungsschiene kann das Zeigerelement 15 in die zweite Stellung gemäß Fig. 2 gestellt werden, wobei dann die Verringerung der Schnitttiefe durch die Führungsschiene an der Anzeige automatisch kompensiert wird und die Anzeigevorrichtung 11 in gewohnter Weise zu verwenden ist. Alternativ ist es auch möglich, dass das Zeigerelement 15 zwischen drei oder mehr Stellungen verstellbar ist, beispielsweise um Führungsschienen unterschiedlicher Höhe zu berücksichtigen.

Das Zeigerelement 15 umfasst bei der dargestellten Ausführungsform zwei Zeigerabschnitte 19, 21, welche einander gegenüberliegen und jeweils der ersten und der zweiten Betriebsart zugeordnet sind. Das Zeigerelement 15 ist schwenkbar mit dem Sockelelement 17 des Maschinenteils verbunden, so dass es um eine im Wesentlichen rechtwinklig zur Anzeigefläche weisende Drehachse D relativ zu dem Sockelelement 17 verdreht werden kann. Durch Verdrehen des Zeigerelements 15 um 180° kann somit wechselweise der erste Zeigerabschnitt 19 oder der zweite Zeigerabschnitt 21 zur Skala 13 hin ausgerichtet werden. Wie in den Figuren zu erkennen ist, ist die Drehachse D von den Zeigerabschnitten 19, 21 versetzt, d.h. gewissermaßen exzentrisch angeordnet, so dass die Zeigerabschnitte 19, 21 bei Ausrichtung zur Skala 13 hin jeweils auf unterschiedliche Positionen auf der Skala 13 zeigen. Der Versatz zwischen den unterschiedlichen Positionen entspricht dabei dem doppelten Abstand zwischen der Drehachse D und der durch die Zeigerabschnitte 19, 21 definierten Zeigerachse.

An den Zeigerabschnitten 19, 21 befinden sich Markierungen 23, 25, welche die der jeweiligen Zeigerelementstellung entsprechende Betriebsart für einen Benutzer deutlich erkennbar machen. Zusätzlich können auch noch weitere Markierungen oder Hinweiszeichen an dem Zeigerelement 15 vorgesehen sein, beispielsweise symbolhafte Darstellungen einer Maschine mit bzw. ohne Führungsschiene, um die Erkennbarkeit der aktuell eingestellten Betriebsart weiter zu erhöhen.

Die Bearbeitungsmaschine kann demgemäß sowohl mit als auch ohne Führungsschiene verwendet werden, ohne dass der Benutzer eine Umrechnung vornehmen muss. Ferner werden kostspielige und/oder den Benutzer eventuell verwirrende Zusatzeinrichtungen, beispielsweise eine zweite Skala zum Darstellen der Schnitttiefe in der zweiten Betriebsart, vermieden. Die Erfindung ermöglicht somit eine umschaltbare Schnittiefenanzeige, die einfach, intuitiv bedienbar und kostengünstig realisierbar ist.

### Bezugszeichenliste

- 11: Anzeigevorrichtung
- 13: Skala
- 15: Zeigerelement
- 17: Sockelelement
- 19, 21: Zeigerabschnitte
- 23, 25: Markierungen
- D: Drehachse

## Patentansprüche

1. Vorrichtung umfassend eine Bearbeitungsmaschine, insbesondere elektrische Tauchkreissäge, wobei die Bearbeitungsmaschine einen, insbesondere eine Grundplatte umfassenden, Grundkörper, ein in Bezug auf den Grundkörper verstellbares Maschinenteil, das ein angetriebenes Bearbeitungswerkzeug umfasst, und eine Anzeigevorrichtung (11) aufweist, die eine Skala (13) und ein Zeigerelement (15) umfasst, wobei die Skala (13) und das Zeigerelement (15) zusammenwirken, um eine aktuelle Position des Bearbeitungswerkzeugs in Bezug auf ein zu bearbeitendes Werkstück, insbesondere eine Bearbeitungstiefe, anzuzeigen,
wobei das Zeigerelement (15) in Bezug auf die Skala (13) zwischen einer ersten Stellung, die einer ersten Betriebsart der Bearbeitungsmaschine entspricht, und einer zweiten Stellung, die einer zweiten Betriebsart der Bearbeitungsmaschine entspricht, umschaltbar ist,
**dadurch gekennzeichnet,**
**dass** die Vorrichtung eine Führungsschiene umfasst, wobei der Versatz der angezeigten Positionen des Bearbeitungswerkzeugs zwischen der ersten und der zweiten Stellung des Zeigerelements (15) der Höhe der Führungsschiene entspricht.

2. Vorrichtung nach Anspruch 1,
**dadurch gekennzeichnet,**
**dass** das Zeigerelement (15) zwei, insbesondere einander gegenüberliegende, Zeigerabschnitte (19, 21) umfasst, welche jeweils der ersten und der zweiten Betriebsart zugeordnet sind und welche jeweils durch Verdrehen des Zeigerelements (15), insbesondere um 180°, um eine bezüglich der Zeigerabschnitte (19, 21) versetzte Drehachse zur Skala (13) hin ausgerichtet werden können.

3. Vorrichtung nach einem der vorhergehenden Ansprüche,
**dadurch gekennzeichnet,**
**dass** an dem Zeigerelement (15) Markierungen oder Hinweiszeichen (23, 25) vorgesehen sind, welche die der jeweiligen Zeigerelementstellung entsprechende Betriebsart für einen Benutzer erkennbar machen.

## Claims

1. An apparatus comprising a processing machine, in particular an electric plunge saw, wherein the processing machine has a base body which in particular includes a base plate, a machine part which is adjustable with respect to the base body and which includes a driven machine tool, and a display apparatus (11) which includes a scale (13) and an indicator element (15), wherein the scale (13) and the indicator element (15) cooperate to indicate a current position of the machine tool with respect to a workpiece to be machined, in particular a machining depth,
wherein the indicator element (15) can be switched with respect to the scale (13) between a first position, which corresponds to a first operating mode of the processing machine, and a second position,
which corresponds to a second operating mode of the processing machine,
**characterised in that**
the apparatus includes a guide rail, with the offset of the indicated positions of the machine tool between the first and second positions of the indicator element (15) corresponding to the height of the guide rail.

2. An apparatus in accordance with claim 1,
**characterised in that**
the indicator element (15) includes two indicator sections (19, 21), which are in particular disposed opposite one another, which are respectively associated with the first and second operating modes and which can each be aligned toward the scale (13) about an axis of rotation offset with respect to the indicator sections (19, 21) by rotating the indicator element (15), in particular by 180°.

3. An apparatus in accordance with one of the preceding claims,
**characterised in that**
markings or indications (23, 25) are provided at the indicator element (15) which make the operating mode corresponding to the respective indicator element position recognisable for a user.

## Revendications

1. Dispositif, comprenant une machine d'usinage, en particulier une scie circulaire plongeante électrique, ladite machine d'usinage comprenant un corps de base, lequel comprend en particulier une plaque de base, une partie de machine déplaçable par rapport au corps de base, laquelle comprend un outil d'usinage entraîné, et un dispositif d'affichage (11), qui comporte une échelle (13) et un élément indicateur (15), ladite échelle (13) et ledit élément indicateur (15) coopérant pour indiquer une position actuelle de l'outil d'usinage par référence à une pièce à oeuvrer, en particulier une profondeur d'usinage,
dans lequel l'élément indicateur (15) est commutable par rapport à l'échelle (13) entre une première situation qui correspond à un premier mode de fonctionnement de la machine d'usinage, et une seconde situation qui correspond à un second mode de fonctionnement de la machine d'usinage,
**caractérisé en ce que**
le dispositif comprend un rail de guidage, tel que le décalage de la position indiquée de l'outil d'usinage entre la première et la seconde situation de l'élément indicateur (15) correspond à la hauteur du rail de guidage.

2. Dispositif selon la revendication 1,
**caractérisé en ce que** l'élément indicateur (15) comprend deux tronçons indicateurs (19, 21), en particulier mutuellement opposés, qui sont associés respectivement au premier et au second mode de fonctionnement, et qui peuvent être orientés par rapport à l'échelle (13) par rotation de l'élément indicateur (15), en particulier sur 180°, autour d'un axe de rotation décalé par rapport aux tronçons indicateurs (19,21).

3. Dispositif selon l'une des revendications précédentes,
**caractérisé en ce que** des marques ou des signes informatifs (23, 25) sont prévus sur l'élément indicateur (15), lesquels rendent reconnaissables à un utilisateur le mode de fonctionnement correspondant à la situation respective de l'élément indicateur.
